# EUROPÄISCHE PATENTANMELDUNG

(11) **EP 3 018 264 A1**
(43) Veröffentlichungstag der Anmeldung: **11.05.2016**
(21) Anmeldenummer: 15192947.8
(22) Anmeldetag: 04.11.2015
(51) Int. Cl.: E04D 11/00, E04D 13/04

(54) **PLATTE EINER WASSER SPEICHERNDEN FLÄCHENKONSTRUKTION**

(30) Priorität: 05.11.2014 DE 202014105312 U; 09.02.2015 DE 202015100605 U
(71) Anmelder: Wischemann Kunststoff GmbH, 48607 Ochtrup (DE)
(72) Erfinder: Ossendorf, Stefan Hubert, 48607 Ochtrup (DE); Harzmann, Uwe, 72488 Sigmaringen (DE); Küsters, Peter, 72488 Sigmaringen (DE)
(74) Vertreter: Habbel, Ludwig

(57) **Zusammenfassung**

Die Erfindung schlägt eine Platte einer Wasser speichernden Flächenkonstruktion vor, wobei die Platte als Tiefziehbauteil ausgestaltet ist, welches eine Vielzahl von Näpfen aufweist, sowie eine Scharnierlinie, die betreffend die Anordnung der Näpfe als Symmetrielinie zwischen den Näpfen verläuft, derart, dass die Platte entlang der Scharnierlinie auf sich selbst faltbar ist und dabei beiderseits der Scharnierlinie angeordnete Näpfe deckungsgleich übereinander zu liegen kommen.

## Beschreibung

Die Erfindung betrifft eine Platte, die in einer Flächenkonstruktion verwendbar ist, beispielsweise in einer Unterkonstruktion eines Flachdachs und dort insbesondere auch bei einer vorgesehenen Dachbegrünung verwendbar ist.

Aus der Praxis ist es bekannt, Dächer zu begrünen. Insbesondere bei Flachdächern ist dabei vorgesehen, ein Wasserreservoir auf dem Dach aufzubauen, so dass Überlastungen der Kanalisation vermieden werden können, indem das Wasser zunächst in diesem Wasserreservoir auf dem Dach zwischengespeichert wird und zu einem späteren Zeitpunkt kontrolliert in die Kanalisation abgelassen werden kann. Zudem kann das Wasserreservoir zur Versorgung der auf dem Dach wachsenden Pflanzen genutzt werden, wenn eine intensive oder extensive Bepflanzung des Dachs, also eine so genannte Dachbegrünung, vorgesehen ist.

Um das gewünschte Wasserreservoir zu schaffen, ist auf dem Dach eine Unterkonstruktion vorgesehen, die ein Hohlvolumen aufweisen muss, welches zur Aufnahme der Wassermenge genutzt werden kann.

Auch wenn keine Dachbegrünung vorgesehen ist, kann eine derartige Unterkonstruktion genutzt werden, um unterhalb einer begehbaren Dachhaut ein entsprechendes Hohlvolumen als Wasserreservoir zur Verfügung zu stellen und somit eine Pufferwirkung zu erzielen, bei welcher das Wasserreservoir als Zwischenspeicher dient und das gespeicherte Wasser zeitversetzt in die Kanalisation abgegeben werden kann.

Auch andere flächenhafte Konstruktionen, beispielsweise begehbare oder befahrbare Böden im Freien, können vorteilhaft in ihrer Unterkonstruktion einen Wasserspeicher aufweisen, um beispielsweise Niederschlagsmengen, die bei Niederschlags-Großereignissen anfallen, zwischenzuspeichern, falls die Kanalisation die anfallenden großen Niederschlagsmengen nicht aufnehmen und ableiten kann.

In jedem Fall muss die Unterkonstruktion eine ausreichende Tragfähigkeit aufweisen, um eine Begehbarkeit der Flächenkonstruktion, beispielsweise der Dachoberfläche zu gewährleisten.

Der Erfindung liegt die Aufgabe zugrunde, eine Platte zu schaffen, die in einer Unterkonstruktion eines Flachdachs verwendbar ist und bei geringen Herstellungskosten sowohl das gewünschte Hohlvolumen als auch die gewünschte Tragfähigkeit aufweist.

Diese Aufgabe wird durch eine Platte mit den Merkmalen des Anspruchs 1 gelöst. Vorteilhafte Unteransprüche der Erfindung sind in den Unteransprüchen beschrieben. Eine besonders vorteilhafte Dachkonstruktion unter Verwendung der Platte ist in Anspruch 15 beschrieben.

Die Erfindung schlägt mit anderen Worten vor, die Platte als Tiefziehbauteil auszugestalten, so dass beispielsweise im Vergleich zu Spritzgussbauteilen eine besonders wirtschaftliche Herstellung der Platte ermöglicht wird. Als Ausgangsmaterial kann beispielsweise eine Kunststoffplatte bzw. Kunststofffolie verwendet werden, wobei vorschlagsgemäß die gewünschte Dreidimensionalität der Unterkonstruktion dadurch geschaffen wird, dass die tief gezogene Platte eine Vielzahl von Näpfen aufweist, also becherartigen Vorsprüngen, die sich von der eigentlichen Plattenebene aus erstrecken, beispielsweise nach unten erstrecken, während bei umgekehrter Anordnung der Platte diese Vorsprünge nach oben ragen würden und dann nicht als Näpfe, sondern beispielsweise als Noppen bezeichnet werden können.

Zur Schaffung des gewünschten Hohlvolumens der Unterkonstruktion kann es je nach Anwendungsfall allerdings gegebenenfalls erforderlich sein, dass die Unterkonstruktion eine gewisse Höhe aufweisen muss, die an Tiefziehbauteile besondere Anforderungen stellt, wie dies bei einer Höhe von beispielsweise 70 oder 80 mm der Fall sein kann. Für Tiefziehbauteile bedeutet eine solche Bauhöhe, dass das tiefgezogene Material erheblich verstreckt werden muss, was eine dementsprechend geringe Wandstärke der Näpfe bewirkt und damit die Tragfähigkeit der Wasser speichernden Platte bzw. der Unterkonstruktion begrenzt. Um eine ausreichend hohe Tragfähigkeit der Unterkonstruktion sicherzustellen, die beispielsweise eine Begehbarkeit oder Bepflanzbarkeit der Unterkonstruktion ermöglicht, ist daher vorschlagsgemäß vorgesehen, dass die Platte mit einer Scharnierlinie versehen ist, so dass die Platte gefaltet werden kann.

Die Scharnierlinie kann quer oder in anderer Richtung, z. B. diagonal, über die Platte verlaufen. Zwei oder mehrere Scharnierlinien können vorgesehen sein, die in unterschiedlichen Richtungen verlaufen, so dass an der Baustelle entschieden werden kann, ob die Platte quer oder in anderer Richtung gefaltet wird, z. B. längs, um die gefaltete Platte in Anpassung an Begrenzungen oder Hindernisse optimal verlegen zu können.

Grundsätzlich ist es ausreichend, überhaupt nur eine einzige Scharnierlinie vorzusehen, oder zumindest eine einzige Scharnierlinie in jeder der eventuell vorgesehenen unterschiedlichen Richtungen vorzusehen, denn die Platte soll ja auf sich gefaltet werden, so dass die unterschiedlichen Scharnierlinien vorteilhaft stets so angeordnet sind, dass sich ein möglichst hoher, im besten Fall vollständiger, Überdeckungsgrad der aufeinanderliegenden Plattenabschnitte ergibt.

Es kann jedoch vorteilhaft sein, wenn die Platte zusätzliche Parallel-Linien zu jeder der unterschiedlichen Scharnierlinien aufweist, so dass bewusst ein geringerer Überdeckungsgrad erzielt wird, wenn ein vergleichsweise kleiner Plattenabschnitt auf den vergleichsweise großen restlichen Plattenabschnitt gefaltet wird. So wird eine doppelt hohe, gefaltete Platte mit geringer Grundfläche geschaffen, die eventuell besonders gut an eine bestimmte örtliche Verlegesituation angepasst sein kann. Der übrig gebliebene Teil der ursprünglichen Platte, der anschließend nicht durch den kleineren Plattenabschnitt bedeckt ist, kann abgeschnitten werden und für sich genommen ebenfalls verwendet werden, wenn eine oder mehrere darin verlaufende Scharnierlinien ebenfalls das vorschlagsgemäße Falten dieses Plattenteils ermöglichen.

Dabei sind die Näpfe beiderseits der Scharnierlinie derart angeordnet, dass die Scharnierlinie eine Symmetrielinie zwischen den beiden Näpfen bildet. Dies führt im Ergebnis dazu, dass die Platte auf sich selbst gefaltet werden kann und dabei über jedem nach unten ragenden Napf des einen Plattenteils ein nach oben ragender Napf des anderen Plattenteils, der zuvor jenseits der Scharnierlinie angeordnet war, zu liegen kommt.

Die insgesamt geschaffene Höhe der Unterkonstruktion kann auf diese Weise verdoppelt werden, so dass die gewünschte Höhe der Unterkonstruktion erreicht werden kann, ohne die Platte zu einem unzulässigen Maß zu verstrecken und dabei die Tragfähigkeit der Unterkonstruktion zu gefährden. Umgekehrt bedeutet dies, dass bei geringeren erforderlichen Höhen, wenn also die Noppenplatten eine geringere Verstreckung des Materials beim Tiefziehvorgang erfahren, die eine gefaltete Noppenplatte enthaltende Unterkonstruktion eine besonders hohe Druckbelastbarkeit aufweist, verglichen mit einer Noppenplatte gleicher Materialstärke, bei welcher die Noppen die selbe Höhe aufweisen wie die beiden aufeinander gefalteten Noppen einer vorschlagsgemäßen Platte.

Vorteilhaft können die Näpfe Durchbrüche aufweisen. Auf diese Weise ist sichergestellt, dass von oben in die Unterkonstruktion gelangendes Wasser, z. B. Niederschlagswasser, vollständig durch die Unterkonstruktion nach unten ablaufen kann und sich somit allseits um die Unterkonstruktion herum in dem Wasserreservoir verteilen kann. Da mittels der Durchbrüche eine Entlüftung der oben angeordneten, nach unten offenen Näpfe ermöglicht wird, wird das Wasseraufnahmevermögen der Unterkonstruktion optimiert, weil auch diese Näpfe vollständig mit Wasser gefüllt werden können.

Die Durchbrüche sind dabei vorteilhaft jeweils im Boden eines Napfes angeordnet, also in dem Bereich, in welchem das Material des Napfes am geringsten verstreckt worden ist. Eine Schwächung der Druckbelastbarkeit der Unterkonstruktion, wie sie durch Schwächungen in der Wandfläche eines Napfes hervorgerufen werden könnte, wird auf diese Weise vermieden.

Vorteilhaft kann die Platte zwischen den Näpfen Durchbrüche aufweisen, so dass auch durch diese Maßnahme die Wasserdurchlässigkeit der Unterkonstruktion gegeben ist.

Insbesondere kann vorgesehen sein, dass sowohl in den Näpfen als auch dazwischen die Platte Durchbrüche aufweist.

Vorteilhaft kann die Tragfähigkeit der Unterkonstruktion und die Druckbelastbarkeit der Näpfe dadurch verbessert werden, dass die Wände der Näpfe gerippt ausgestaltet sind, wobei die Rippen in axialer Richtung der Näpfe, also in deren Hochrichtung, verlaufen.

Die vorschlagsgemäß vorgesehene Scharnierlinie erleichtert das Falten der Platte entlang einer konstruktiv vorgesehenen Linie. Dies kann beispielsweise durch Scharnierelemente erfolgen, die als separate Elemente hergestellt sind und die beiden Plattenabschnitte miteinander verbinden. Derartige Scharnierelemente können beispielsweise zwei gegenüberliegende Klemmstücke mit Nuten aufweisen. Die Klemmstücke können auf die Ränder der beiden benachbarten Plattenabschnitte aufgesteckt werden, so dass die beiden Plattenabschnitte nun durch das Scharnierelement miteinander verbunden sind und um die Scharnierachse aufeinander gefaltet werden können.

Vorteilhaft kann die Scharnierlinie durch die Platte selbst gebildet werden, so dass kein zusätzliches Bauteil erforderlich ist und ein Scharnier auch nicht an zwei Plattenteilen montiert zu werden braucht. Die Platte ist in diesem Fall vielmehr mit einer Schwächungslinie versehen, die als Scharnier dient. Beispielsweise kann die Schwächungslinie durch eine Perforation der Platte geschaffen sein, so dass entlang dieser Schwächungslinie die Platte problemlos gefaltet werden kann. Besonders vorteilhaft kann die Scharnierlinie als Filmscharnier ausgestaltet sein, so dass im Unterschied zu einer Perforationslinie die Platte entlang des gesamten Verlaufs der Scharnierlinie unterbrechungsfrei mit einem verringerten Materialquerschnitt ausgestaltet werden kann und dementsprechend einen einerseits besonders leichten, widerstandsarmen und andererseits besonders zuverlässigen der gewünschten Scharnierlinie folgenden Faltvorgang ermöglicht.

Vorteilhaft können die Näpfe in einem regelmäßigen Raster angeordnet sein, so dass die Druckbelastbarkeit der Unterkonstruktion über die gesamte Fläche hinweg möglichst gleich ausgestaltet ist. Dabei können die Näpfe vorteilhaft in einem quadratischen Raster angeordnet sein, so dass die Lücken zwischen benachbarten Näpfen möglichst gering gehalten werden können und ebenfalls möglichst gleich über die Plattenfläche verteilt angeordnet sind zu Gunsten möglichst gleichmäßiger Druckbelastbarkeitseigenschaften der Unterkonstruktion.

Grundsätzlich kann vorgesehen sein, die Platte beiderseits der Scharnierlinie unterschiedlich zu gestalten. Vorteilhaft jedoch sind die Näpfe beiderseits der Scharnierlinie gleich tief, so dass eine optimale Druckstabilität der Unterkonstruktion sichergestellt werden kann, da nicht ein Teil der Platte tiefere Näpfe mit einer dementsprechend geringeren Wandstärke und einer dementsprechend verringerten Druckbelastbarkeit aufweist.

Vorteilhaft können die Näpfe eine Tiefe von höchstens 60 mm aufweisen, insbesondere vorteilhaft eine Tiefe von 30 bis 50 mm, beispielsweise eine Tiefe von etwa 40 mm. Auf diese Weise wird durch das Falten der Platte eine Unterkonstruktion mit einer Höhe von etwa 80 mm ermöglicht und damit ein ausreichend großes Wasserreservoir geschaffen, und durch diese Napftiefe wird eine Verstreckung des Ausgangsmaterials geschaffen, die auch bei Verwendung von preisgünstigem Ausgangsmaterial die gewünschte Druckbelastbarkeit der Unterkonstruktion sicherstellt.

Vorteilhaft können sich die Näpfe jeweils zu ihrem Boden hin verjüngen, so dass zwei gleichartige Platten ineinander genestet werden können. Als nesten wird dabei der Vorgang verstanden, zwei gleichartige Platten so ineinander zu stecken, dass die Näpfe der oberen Platte in die Näpfe der unteren Platte eintauchen. Auf diese Weise kann ein besonders platzsparender Transport einer Vielzahl von Platten erfolgen und das endgültige Volumen der Unterkonstruktion ergibt sich erst am Aufstellungsort der Platten, wenn die Platten nämlich gefaltet werden.

Im Vergleich dazu, zwei gleichartige Platten aufeinander zu legen, bewirkt die vorschlagsgemäß vorgesehene Faltmöglichkeit eine definierte Anordnung der beiden Platten, so dass die oberen Näpfe zuverlässig über den unteren Näpfen positioniert sind. Dadurch, dass die beiden aufeinander gefalteten Plattenteile entlang der Scharnierlinie miteinander verbunden sind, ist die Unterkonstruktion zuverlässig dagegen gesichert, dass die oberen Näpfe gegenüber den unteren Näpfen verrutschen. Insbesondere wenn Durchbrechungen zwischen den Näpfen vorgesehen sind, um eine Wasserdurchlässigkeit der Unterkonstruktion zu gewährleisten, wird durch diese verrutschungssichere Positionierung des oberen auf dem unteren Plattenteil sichergestellt, dass diese Durchbrechungen miteinander fluchten und die gewünschte Wasserdurchlässigkeit der Unterkonstruktion gegeben ist.

Eine vorteilhafte Dachkonstruktion kann mit Hilfe der vorschlagsgemäßen Platte ermöglicht werden. Die Dachkonstruktion weist eine Deckschicht auf, beispielsweise die begehbare Oberfläche eines Flachdachs, oder eine aus Substrat und Pflanzen gebildete natürliche Deckschicht. Die Deckschicht wird von einer Unterkonstruktion getragen, welche die vorschlagsgemäße Platte aufweist und somit einen Wasserspeicher bildet. Im Falle der Dachbegrünung dient der Wasserspeicher zur Versorgung der Pflanzen in niederschlagsarmen Zeitintervallen.

Ein Ausführungsbeispiel der Erfindung wird anhand der rein schematischen Darstellungen nachfolgend näher erläutert. Dabei zeigt
- Fig. 1: eine Platte während des Faltvorgangs, und
- Fig. 2: eine Unterkonstruktion, die durch die gefaltete Platte von Fig. 1 geschaffen ist.

In den Zeichnungen ist mit 1 jeweils insgesamt eine Platte bezeichnet, die aus einer tiefgezogenen Kunststofffolie besteht und eine Vielzahl von Näpfen 2 aufweist, die in einem quadratischen Raster angeordnet sind. An den Kreuzungspunkten dieses Rasters, zwischen den Näpfen 2, weist die Platte 1 jeweils Durchbrüche 3 auf.

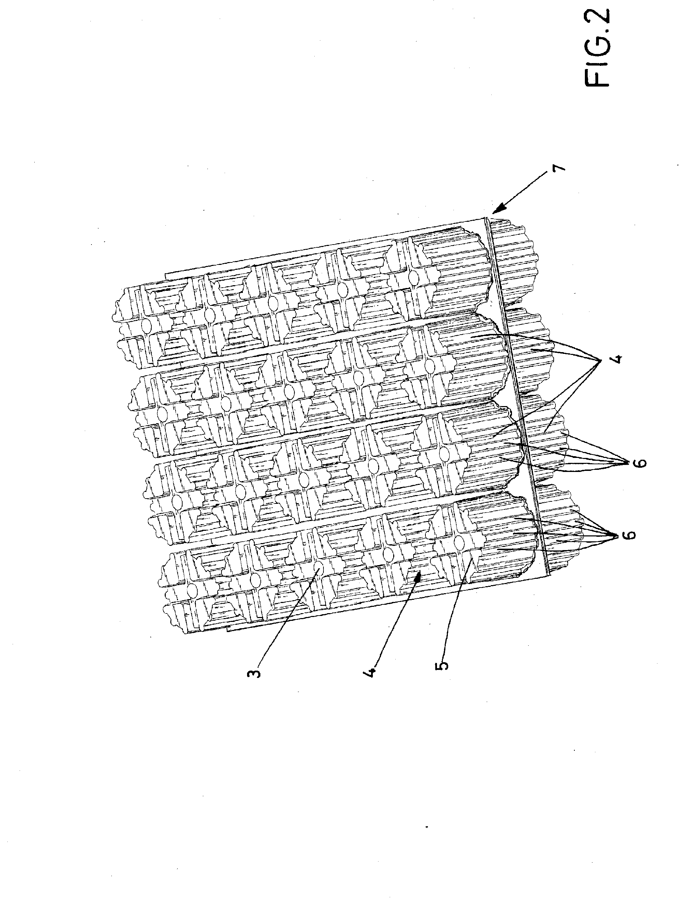

Die Näpfe 2 weisen einerseits eine umlaufende Wandfläche 4 auf sowie einen Boden 5, und auch in den Böden 5 sind jeweils Durchbrüche 3 vorgesehen, wie insbesondere aus Fig. 2 ersichtlich ist. Zur Erhöhung der Druckstabilität sind die Wandflächen 4 der Näpfe 2 mit Rippen 6 versehen, die jeweils längs bzw. im Wesentlichen parallel zu den Mittelachsen der Näpfe 2 verlaufen.

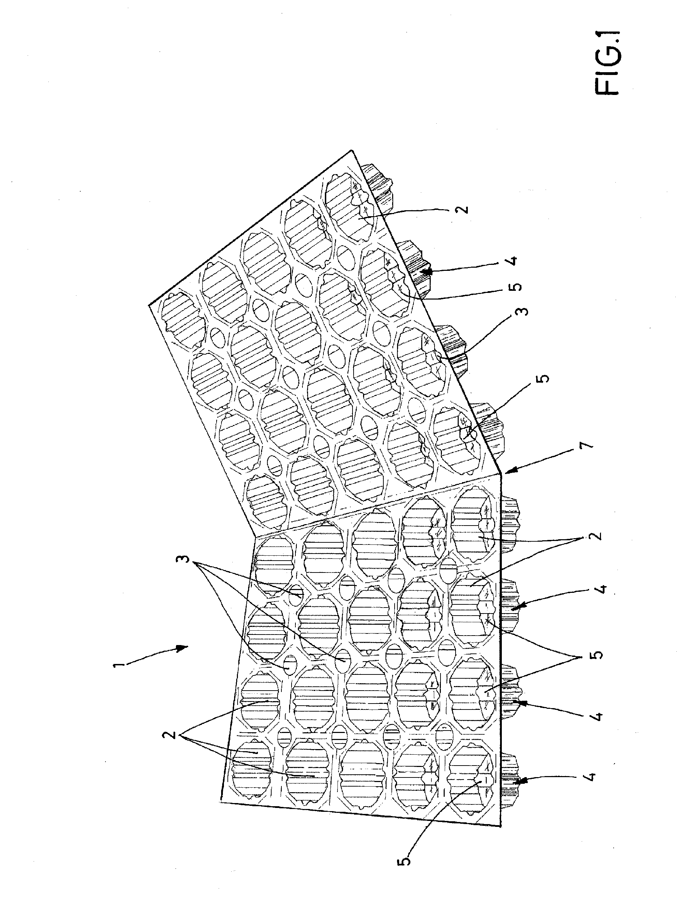

Zwischen zwei Reihen von Näpfen 2 verläuft eine Scharnierlinie 7, die als Filmscharnier ausgestaltet ist, so dass die Platte 1 entlang dieser Scharnierlinie 7 auf sich selbst gefaltet werden kann, wie dies aus Fig. 1 ersichtlich ist.

Fig. 2 zeigt das Ergebnis dieses Faltvorgangs: Dadurch, dass die Scharnierlinie 7 als Symmetrielinie zwischen den Näpfen 2 verläuft, also beiderseits der Scharnierlinie 7, die Näpfe 2 symmetrisch zueinander angeordnet sind, liegen nach dem Faltvorgang die Näpfe 2 des oberen Plattenteils genau über den Näpfen 2 des unteren Plattenteils und auch die Durchbrüche 3, die zwischen den Näpfen 2 angeordnet sind, fluchten miteinander.

## Patentansprüche

1. Platte (1) einer Wasser speichernden Flächenkonstruktion, wobei die Platte (1) als Tiefziehbauteil ausgestaltet ist, welches eine Vielzahl von Näpfen (2) aufweist,
sowie eine Scharnierlinie (7), die betreffend die Anordnung der Näpfe (2) als Symmetrielinie zwischen den Näpfen (2) verläuft,
derart, dass die Platte (1) entlang der Scharnierlinie (7) auf sich selbst faltbar ist und dabei beiderseits der Scharnierlinie (7) angeordnete Näpfe (2) deckungsgleich übereinander zu liegen kommen.

2. Platte nach Anspruch 1,
**dadurch gekennzeichnet,**
**dass** die Näpfe (2) Durchbrüche (3) aufweisen.

3. Platte nach Anspruch 2,
**dadurch gekennzeichnet,**
**dass** die Durchbrüche (3) jeweils im Boden (5) eines Napfes (2) angeordnet sind.

4. Platte nach einem der vorhergehenden Ansprüche,
**dadurch gekennzeichnet,**
**dass** die Platte (1) zwischen den Näpfen (2) Durchbrüche (3) aufweist.

5. Platte nach einem der vorhergehenden Ansprüche,
**dadurch gekennzeichnet,**
**dass** die Näpfe (2) gerippt ausgestaltete Wandflächen (4) aufweisen, wobei die Rippen (6) in der Hochrichtung der Näpfe (2) verlaufen.

6. Platte nach einem der vorhergehenden Ansprüche,
**dadurch gekennzeichnet,**
**dass** die Scharnierlinie (7) als Schwächungslinie der Platte (1) ausgestaltet ist.

7. Platte nach Anspruch 6,
**dadurch gekennzeichnet,**
**dass** die Scharnierlinie (7) als Filmscharnier ausgestaltet ist.

8. Platte nach einem der vorhergehenden Ansprüche,
**dadurch gekennzeichnet,**
**dass** die Näpfe (2) in einem regelmäßigen Raster angeordnet sind.

9. Platte nach Anspruch 8,
**dadurch gekennzeichnet,**
**dass** die Näpfe (2) in einem quadratischen Raster angeordnet sind.

10. Platte nach einem der vorhergehenden Ansprüche,
**dadurch gekennzeichnet,**
**dass** die Näpfe (2) beiderseits der Scharnierlinie (7) die gleiche Tiefe aufweisen.

11. Platte nach einem der vorhergehenden Ansprüche,
**dadurch gekennzeichnet,**
**dass** die Näpfe (2) eine Tiefe von höchstens 60 mm aufweisen.

12. Platte nach Anspruch 10,
**dadurch gekennzeichnet,**
**dass** die Näpfe (2) eine Tiefe von 30 bis 50 mm aufweisen.

13. Platte nach einem der vorhergehenden Ansprüche,
**dadurch gekennzeichnet,**
**dass** die Näpfe (2) sich jeweils zum Boden (5) verjüngen, derart, dass zwei gleichartige Platten (1) ineinander nestbar sind, wobei die Näpfe (2) der oberen in die Näpfe (2) der unteren Platte (1) eintauchen.

14. Platte nach einem der vorhergehenden Ansprüche,
**dadurch gekennzeichnet,**
**dass** zwei Scharnierlinien (7) vorgesehen sind, die in unterschiedlichen Richtungen über die Platte (1) verlaufen.

15. Dachkonstruktion,
mit einer Deckschicht und einer die Deckschicht tragenden Unterkonstruktion,
wobei in der Unterkonstruktion eine Platte angeordnet ist, die nach einem der vorhergehenden Ansprüche ausgestaltet ist.
